Europäisches Patentamt

European Patent Office

Office européen des brevets

(11) Veröffentlichungsnummer: **0 222 128**

A2

## (12) EUROPÄISCHE PATENTANMELDUNG

(21) Anmeldenummer: 86113406.2

(22) Anmeldetag: 30.09.86

(51) Int. Cl.⁴: **B 60 L 5/26**

(30) Priorität: 16.10.85 DE 3536843

(43) Veröffentlichungstag der Anmeldung:
20.05.87 Patentblatt 87/21

(84) Benannte Vertragsstaaten:
AT CH FR GB LI

(71) Anmelder: DORNIER SYSTEM GmbH
Postfach 1360
D-7990 Friedrichshafen(DE)

(72) Erfinder: Bartels, Sven, Dipl.-Ing.
Hepbacher Strasse 22
D-7778 Markdorf 2(DE)

(72) Erfinder: Hüther, Herbert
Ifenweg 6
D-7988 Wangen i.A.(DE)

(72) Erfinder: Schwarz, Lorenz, Ing. (grad.)
Bruggerweg 9
D-7997 Immenstaad(DE)

(74) Vertreter: Landsmann, Ralf, Dipl.-Ing.
Kleeweg 3
D-7990 Friedrichshafen 1(DE)

(54) Stromabnehmervorrichtung.

(57) Die Stromabnehmervorrichtung für gleisgebundene
Fahrzeuge besteht aus einer Potentialtrennung zum Dach
mittels Isolatoren (22), einem Grundrahmen mit Hubantrieb
und Stromführung, einer Unter- und Oberschere (2, 3) mit
Steuerstange (14) und Verstrebungen, darauf aufbauend eine
Wippe (7) mit Auflaufhorn (23) und mit einer darauf angeordneten zwei zueinander parallel und quer zum Fahrdraht
(8) ausgerichteten, zu dessen beiden Seiten abgestützten, als
Verbundkonstruktion aus gepreßter Harthohle und einem
metallischen Träger (16) bestehenden Schleifleisten (9).
Hierbei sind die Isolatoren (22) innerhalb des Gestänges der
Unter- und Oberschere (2, 3) angeordnet. Die Steuerstange
(14) ist starr ausgebildet und mit einem mit der Wippe (7)
starr verbundenen Anlenkhebel (13) und mit der Unterschere
(2) gelenkig verbunden.

a)

0222128

DORNIER SYSTEM GMBH

7990 Friedrichshafen

Reg. S 521 EU

Stromabnehmervorrichtung

Die Erfindung betrifft eine Stromabnehmervorrichtung für gleisgebundene Fahrzeuge gemäß dem Oberbegriff von Anspruch 1.

Vorrichtungen zur Stromzufuhr aus dem Fahrdraht (Oberleitung) an elektrisch angetriebenen Fahrzeugen sind in verschiedenen Ausführungsformen für gleisgebundene und/oder gleislosen Betrieb bekannt. Bei der Zufuhr von Strom über eine Oberleitung werden Rollen oder Schleifkontakte auf Bügel- oder Scheren-Stromabnehmer benutzt. Für gleisgebundene Fahrzeuge, wie bei elektrischen Triebwagen von Eisenbahnzügen, finden zur Energieübertragung hauptsächlich Scheren-Stromabnehmer Verwendung. Sie bestehen im wesentlichen aus einem Grundrahmen mit einer aus einem oder zwei Viergelenkgetrieben aufgesetzter Scherenkonstruktion großer Bauhöhe.

Dies ist bedingt durch die bisherige Anordnung der Isolation zwischen Dach und Grundrahmen mit Hub- und Senkabtrieb und der Scherenkonstruktion mit Stromführungen und wirkt sich insbesondere wegen dem damit verbundenen hohen Luftwiderstand bei Hochgeschwindigkeitszügen ungünstig aus.

Im Scheitelpunkt der Scherenkonstruktion befinden sich quer zur Fahrtrichtung drehbar gelagerte und zum Fahrdraht selbstausrichtende Wippen. Die Wippen bestehen aus ein bis drei federnd gelagerten und mit einem Kontaktwerkstoff ausgelegten Metall-Schleifleisten als Tragkonstruktion und seitlich nach unten gezogenen Auflaufhörnern. Um die Funktionsfähigkeit zu gewährleisten und um den Verschleiß von Kontaktwerkstoff und Fahrdraht in Grenzen zu halten, sollen die beiden Schleifleisten einerseits möglichst gleichmäßig an den Fahrdraht angepreßt werden und andererseits darf die Wippe nicht abkippen. Dies geschieht, wenn die Wippe beispielsweise während der Fahrt durch aerodynamische Kräfte mit einem Moment belastet wird oder während des Absenkens und Anhebens des Stromabnehmers.

Bei den bisher bekannten Stromabnehmern ist eine Steuerstange vorgesehen, die relativ große ($\pm$15°) Kippwinkel zuläßt, aber ein Abkippen der Wippe während des Hebens und Senkens verhindert. Die Steuerstange ist hierbei mit der Scherenkonstruktion gekoppelt, wobei die Wippe über einen damit verbundenen Anlenkhebel etwa parallel zum Fahrdraht geführt wird. Um einen Ausgleich der Anpreßkräfte der beiden Schleifleisten zu ermöglichen, ist entweder der Anlenkhebel über eine gedämpfte Drehfeder mit der Wippe starr verbunden, oder die Steuerstange ist an einem ihrer beiden Gelenkpunkte nicht starr, sondern über eine Feder und/oder einen Dämpfer angeschlossen und läßt so eine Kippbewegung der Wippe zu.

Für höhere Fahrgeschwindigkeiten mußte bisher eine aerodynamischer Momentenausgleich vorgesehen werden, weil das Moment um die Wippendrehachse zu unerwünschten unterschiedlichen Anpreßkräften von vorderer und hinterer Schleifleiste an den Fahrdraht führt. Der aerodynamische Momentenausgleich mußte auf den jeweiligen Abnutzungszustand der Schleifleisten und die momentane Einfederung neu eingestellt werden. Außerdem ist problematisch, daß mit höherer Fahrgeschwindigkeit die Federung der Schleifleisten weicher sein sollte, was aber die Kippempfindlichkeit der Wippe noch erhöht.

Alle diese Nachteile bewirken, daß bei nicht genau paralleler Lage des Fahrdrahtes zur Oberkante der beiden Schleifleisten (dieser Fall liegt aus verschiedenen Gründen immer vor) diese u.a. auch wegen der hohen Schleifleisten-Aufhängesteifigkeit unterschiedlich stark an den Fahrdraht angepreßt werden. Kleine Kippwinkel führen dadurch schon zu großen Kraftunterschieden, wobei die relativ hohe Aufhängesteifigkeit der Schleifleisten eine relativ starre Kopplung der großen Massen
der Scherenkonstruktion bewirkt und wodurch der dynamische
Anteil der Anpreßkräfte erhöht wird.
Dadurch sind die Schleifleisten und der Fahrdraht durch Abnutzung ungünstig beeinflußt. Die Wippe kann beim Absenken
aufgrund der nicht starren Anlenkung der Steuerstange Kippbewegungen ausführen und benötigt dadurch mehr Freiraum.

Zum Beispiel ist aus der DE-PS 29 09 855 ein Halbscherenstromabnehmer bekannt, der eine im Scheitelgelenk des oberen
Holmes der Halbschere drehbar gelagerte Wippe oder Palette
als Schleifstückträger aufweist, die einen über das Scheitelgelenk hinaus verlängerten Ansatz hat, an dessen freien Ende
das eine Ende einer annähernd parallel zu dem oberen Holm der
Halbschere angeordneten Parallelogrammstange gelenkig gelagert ist. Die Wippe oder Palette ist hierbei gegenüber dem
oberen Holm der Halbschere um einige Winkelgrade rückstellkraftfrei kippbar angeordnet. Zur Dämpfung der Kippbewegung
ist ein hydraulischer Schwingungsdämpfer vorgesehen.

Einen weiteren Nachteil weist der für die Schleifleisten zur
Stromabnahme verwendete Träger auf. Die Stromabnehmer zur
Energieübertragung vom Fahrdraht auf das Fahrzeug sind üblicherweise an der Kontaktstelle Fahrdraht/Schleifleiste
stromabnehmerseitig mit auswechselbaren Schleifstücken versehen. Als Kontaktwerkstoff für die Stromabnahme aus dem reichender Federweg zur Verfügung stehen und kein Verklemmen der Führungen eintreten. Neigungen des Fahrdrahtes (z.B. bei Brückensenkungen) und infolge von Schwingungen im Fahrdraht auftretende Wellen sollten ohne Abheben auch nur einer Schleifleiste oder eines Kantenlaufes zu befahren sein. Die in Relation zur Nennanpreßkraft (ca. 70 N) hohen Windkräfte (ca. 700 N) sollten sicher übertragen werden und grobe Fertingungstoleranzen in der Länge der Schleifleisten, statische, dynamische und thermische Verformungen unter Betriebsbedingungen sollten zu keiner Störung führen.

Erfindungsgemäß wird die gestellte Aufgabe durch die kennzeichnenden Merkmale von Anspruch 1 gelöst.
Vorteilhafte Weiterbildungen ergeben sich aus den Unteransprüchen.

Der Vorteil der Erfindung besteht darin, daß durch die Anordnung der Isolatoren innerhalb des Gestänges der Ober- und Unterschere eine niedrige Bauhöhe erreicht wird, wodurch sich insbesondere bei Hochgeschwindigkeiten der Luftwiderstand verringert. Damit ist zugleich ein Nebeneinanderliegen der Scherenanordnung im eingefahrenen bzw. abgesenkten Zustand verbunden; ihr bisheriges Übereinanderliegen entfällt. Im ausgefahrenen Zustand bleiben durch diese Isolatorenanordnung der Grundrahmen mit Hubtrieb, Stromführung u.a. innerhalb der Dachsenke des Fahrzeuges und liegen so in der Strömungsgrenzschicht. Wegen der niedrigen Bauhöhe sind die Enden des Auflaufbügelhorns hochgeklappt und liegen über die Dachsenke hinaus am Wagendach auf. Ein weiterer Vorteil besteht darin, daß durch die Anordnung einer feder- und dämpfungsfreien starren Steuerstange und steifen Anlenkung an den Trägern der Wippe und ihre zwangsweise Führung gegen den Fahrdraht der notwendige Freiraum für die einzelnen Wippenlemente kleiner und genauer vorherbestimmbar ist. Dies ist hiermit auch dann der Fall, wenn die Wippe mit ihren daran angeordneten Schleifleisten am Fahrdraht nicht anliegt. Durch die an Trägern senkrecht federnd geführten und über Kugelgelenke oder Gabelträger mit der Wippe verbundenen Schleifleisten, werden kleine Aufhängesteifigkeiten der Schleifleisten möglich. Somit wird auch eine weitgehende Entkopplung der relativ großen Massen der Scherenkonstruktion und damit eine Verringerung des dynamischen Anteils der Schleifleisten- und Fahrdrahtanpreßkräfte erreicht. Auch bei nicht ganz paralleler Führung der Wippe oder bei nicht paralleler Führung des Fahrdrahtes sind die Anpreßkräfte weitgehend gleichmäßig. Eine Rückwirkung der aerodynamischen Momente an der Wippe auf die Anpreßkräfte der Schleifleisten ist ausgeschlossen. Durch die Anordnung von Geradführungen bei der Schleifleistenaufhängung ergibt sich keine Rückwirkung der Schleifleistenwindlast auf das Federsystem. Mit der Auslegung des Trägers der Schleifleisten mit Profilen aus Werkstoffen mit geringem oder negativen Wärmeausdehnungskoeffizienten wird eine Längenänderung des Trägers unter Einfluß von betriebsbedingter Erwärmung praktisch vermieden oder derart gesteuert, daß die auf den Profilen befestigte Hartkohle durch den dabei entstehenden Druck vorgespannt und somit ein Reißen der Kohleschicht verhindert wird. Hierzu geeignete Profile, z.B. unidirektional ausgerichtete CFK-Profile mit sehr kleinen Wärmeausdehnungskoeffizienten, weden an geeigneter Stelle in oder an die Trägerprofile unter gleichzeitiger Vorspannung der metallischen Träger durch Wärme oder Verformung geklebt oder genietet.

Ausführungsbeispiele sind nachstehend beschrieben und durch Skizzen erläutert.

Es zeigen:

Figuren 1a, b, c       eine Stromabnehmervorrichtung mit Scherenkonstruktion, Wippe mit Schleifleisten und Steuerstange,

Figuren 2a, b, c, d    eine Wippe mit Schleifleisten aus verschiedenen Ansichten,

Figuren 3a, b, c, d    einen Träger einer Schleifleiste mit darin auf Profilen angeordnetem Kontaktwerkstoff.

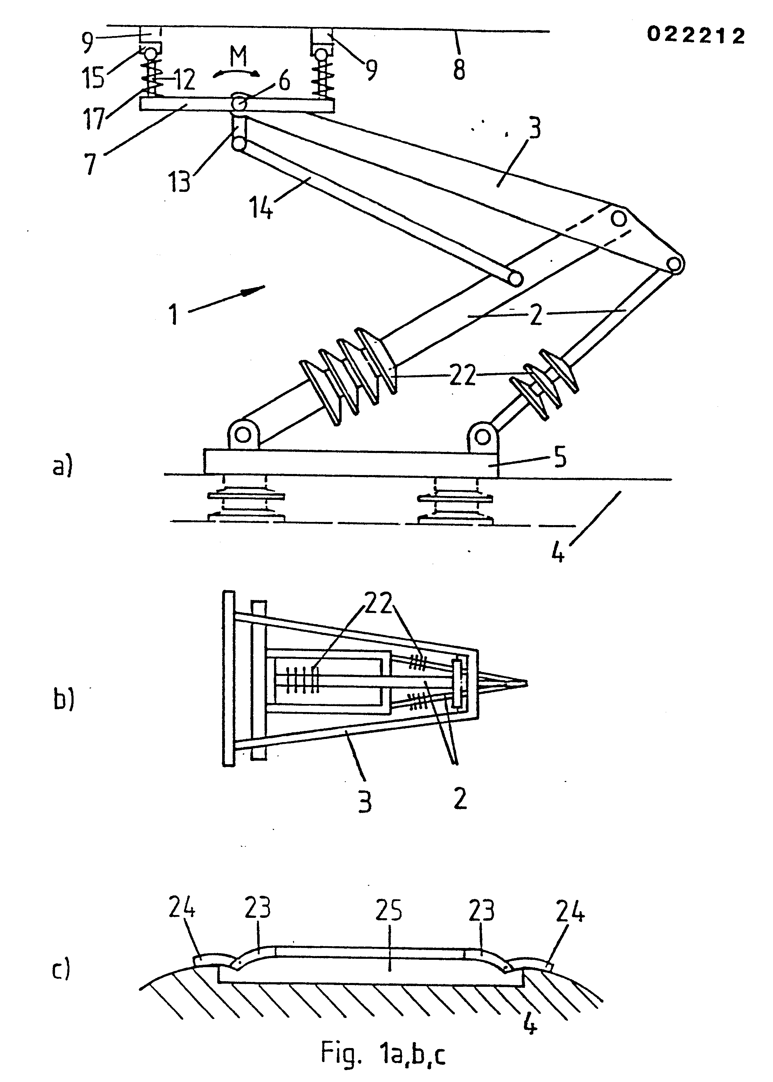

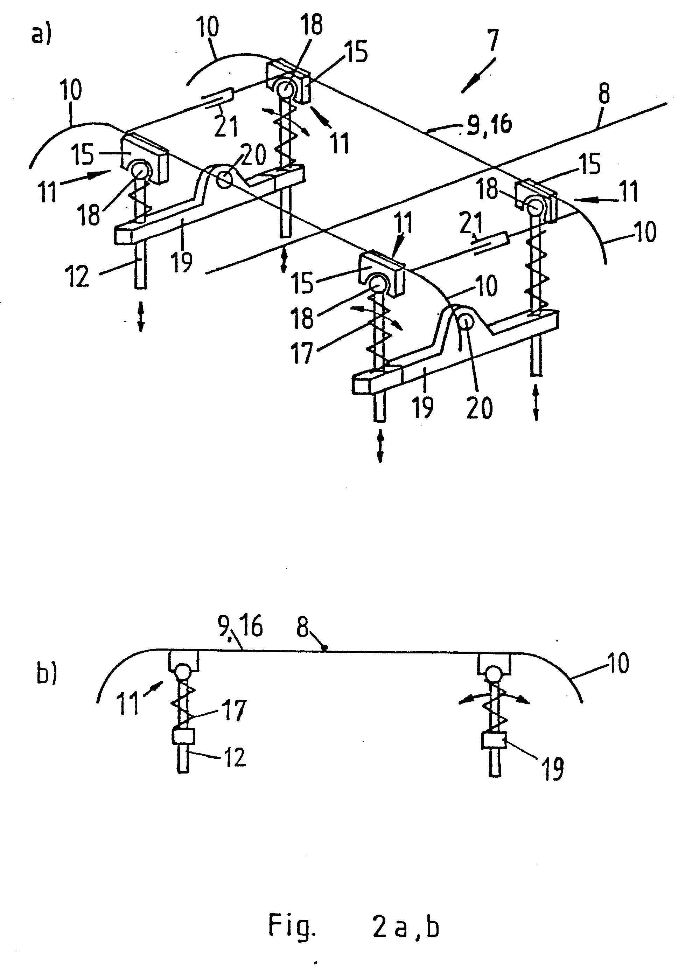

Aus den Figuren 1a, b, c ist eine Scherenkonstruktion der Stromabnehmervorrichtung 1 in seitlicher Ansicht (Figur 1a), in der Ansicht von oben (Figur 1b) und in Fahrtrichtungsansicht (Figur 1c) ersichtlich. Hiervon stellt Figur 1a die
prinzipielle Anordnung der Isolatoren 22 dar, die innerhalb
des Gestänges der Scherenkonstruktion 1 angeordnet sind.
Durch diese Anordnung der Isolatoren 22 wird eine Einsparung
des Mindestabstandes von ca. 150 mm von stromführenden Teilen
zum Wagendach erzielt. Das heißt, daß dadurch die bisherige
Bauhöhe (siehe strichlierte Isolatoren) eingespart wird. Der
Rahmen 5, an dem die Unterschere 2 drehbar angelenkt ist,
wird direkt auf dem Dach 4 des Fahrzeuges befestigt. Die
Oberschere 3 ist ausgefahren und die Wippe 7 liegt mit ihren
Schleifleisten 9 am Fahrdraht 8 an. Die Figur 1b zeigt eine
Stromabnehmervorrichtung 1 mit Isolatoren 22 im eingefahrenen
Zustand. Hierbei liegen Unterund Oberschere 2, 3 nebeneinander und nicht wie bisher übereinander. Figur 1c zeigt in
Fahrtrichtung die Auflaufhörner 23 im abgesenkten Zustand,
dessen klappbare Enden 24 über die Dachsenke 25 hinaus auf
dem Dach 4 des Fahrzeuges aufliegen.
Durch die Anordnung in der Dachsenke 25 wird im ein- und ausgefahrenen Zustand ein geringerer Luftwiderstand, insbesondere im Hochgeschwindigkeitsbereich, erzielt. Der für die
Funktion erforderliche Antrieb erfolgt über Luftdruck und
liegt auf Masse. Es ist keine elektrische Trennung der Druckluftzuführung erforderlich.

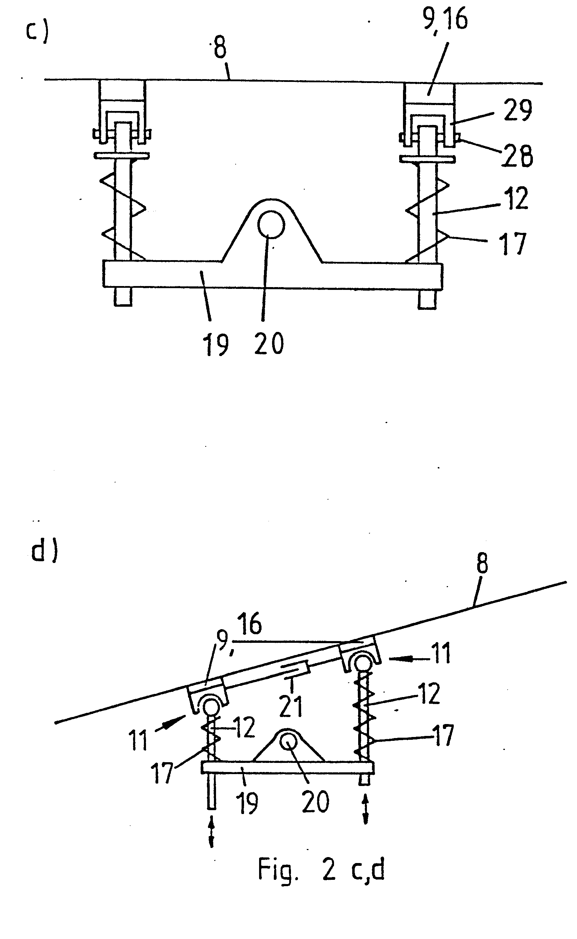

Im Scheitelpunkt 6 der Oberschere 3 ist eine Wippe 7 kippbar angeordnet, die auf der zum Fahrdraht 8 befindlichen Seite zwei zueinander parallel und quer zum Fahrdraht 8 ausgerichtete Schleifleisten 9 mit seitlich bogenförmig nach unten gezogenen Schleifleistenhörnern 10 (Figuren 2a, b) trägt. Die Schleifleisten 9 sind jede zu beiden Seiten des Fahrdrahtes 8 auf zwei Kugelgelenken 11 befestigt, die an senkrecht federnd geführten und mit der Wippe 7 verbundenen Trägern 12 angeordnet sind (Figuren 2a, b, c). Mit der Wippe 7 ist ein nach unten gerichteter Anlenkhebel 13 starr verbunden, mit dem eine mit der Unterschere 2 gelenkig verbundene starr ausgebildete Steuerstange 14 verbunden ist. Die Funktion der Stromabnehmervorrichtung 1 wird gewährleistet und der Verschleiß von Schleifleisten 9 und Fahrdraht 8 vermindert durch die kippfeste Anordnung der gesamten Wippe 7 und den damit erzielten gleichmäßigen Anpreßdruck der Schleifleisten 9 an den Fahrdraht 8. Dies ist hauptsächlich dann der Fall, wenn die Wippe 7 beispielsweise durch die während der Fahrt auftretenden aerodynamischen Kräfte mit einem Moment M belastet wird oder wenn die Wippe 7 im abgesenkten Zustand am Fahrdraht 8 nicht anliegt.

In den Figuren 2a, b, c, d ist eine Wippe 7 aus verschiedenen Ansichten im Prinzip gezeigt. Aus der perspektivischen Ansicht Figur 2a ist die Anordnung der zueinander parallel und quer zum Fahrdraht 8 ausgerichteten und mit seitlich vom Fahrdraht 8 bogenförmig nach unten gezogenen Schleifleistenhörnern 10 versehenen Schleifleisten 9 ersichtlich. Sie sind auf je zwei zu beiden Seiten des Fahrdrahtes 8 befindlichen Kugelgelenken 11 angeordnet, wovon ihre Kugelpfannen 15 mit dem metallischen Träger 16 der Schleifleisten 9 fest verbunden sind. Die Kugelpfannen 15 werden getragen von den senkrecht angeordneten und mit Federn 17 versehenen Trägern 12, deren obere Enden je einen Kugelkopf 18 tragen, die in den daraufliegenden Kugelpfannen 15 beweglich lagern. Die Träger 12 sind in Verbindungsstücken 19 vertikal verschiebbar, wobei sich die Federn 17 nach unten darauf und nach oben an den Kugelgelenken 11 abstützen.

Die Verbindungsstücke 19 weisen in ihrer Mitte laschenförmige Verstärkungen mit Bohrungen 20 auf, worin eine in der Figur nicht näher gezeigte Verbindung zur Oberschere 3 (Figur 1) anordenbar ist. Zwischen den Schleifleisten 9 ist im Bereich der Kugelgelenke 11 je eine selbsteinstellende Momentenstütze 21 angeordnet, die zusammen für eine ausreichende Stabilität während der Fahrt und für die Unabhängigkeit von Toleranzen und Verformungen der Schleifleisten 9 und Wippe 7 sorgen.

Figur 2b zeigt eine Schleifleiste 9 mit Träger 16 und Schleifleistenhörnern 10 angedrückt an den Fahrdraht 8 mit Kugelgelenken 11, Trägern 12 und Federn 17 und Momentenstütze 21 in seitlicher Ansicht in Fahrtrichtung. Durch die Verbindung der Schleifleisten 9 mit Kugelgelenken 11 und deren federnde Führung kann sich die Wippe 7 in die jeweilige Lage zum Fahrdraht 8 während der Fahrt selbsttätig ausrichten, wobei die starre Steuerstange 14 und Geradführung (Figur 1) nicht stören.

Um einen Längenausgleich der Schleifleisten 9 in ihren Führungen und Halterungen zu gewährleisten, ist an jeder Schleifleiste 9 je ein Träger 12 an den Verbindungsstücken 19 kippbar gelagert (siehe Pfeilbogen in Figuren 2a und b).

Figur 2c zeigt die Schleifleisten 9 mit ihren Trägern 16 in seitlicher Ansicht am Fahrdraht 8 anliegend. Hierbei sind die Schleifleisten 9 und Träger 16 auf Gabelträger 29 befestigt. Die Schenkel der Gabelträger 29 und die senkrecht federnd geführten Träger 12 sind mit in Fahrtrichtung ausgerichteten Bolzen 28 kippbar verbunden. Durch diese Anordnung wird ein Kippen der Schleifleisten 9 quer zur Fahrtrichtung ermöglicht, wodurch der während der Fahrt sich ständig verändernde Auflagepunkt des Fahrdrahtes 8 und die unterschiedliche Einfederung der zu einer Schleifleiste 9 gehörenden Träger 12 ausgeglichen wird. Eine sich selbsteinstellende Momentenstütze kann hier entfallen.

Figur 2d zeigt die Schleifleisten 9 mit Trägern 16 in seitlicher Ansicht zum schräg hängenden Fahrdraht 8. Durch die in den Verbindungsstücken 19 federnd geführten Kugelgelenke 11 mit Trägern 12 wird ein Höhenausgleich erzielt, wodurch die Schleifleisten 9 mit Trägern 16 sicher an den Fahrdraht 8 angedrückt werden, was durch die Momentenstützen 21 unterstützt wird.


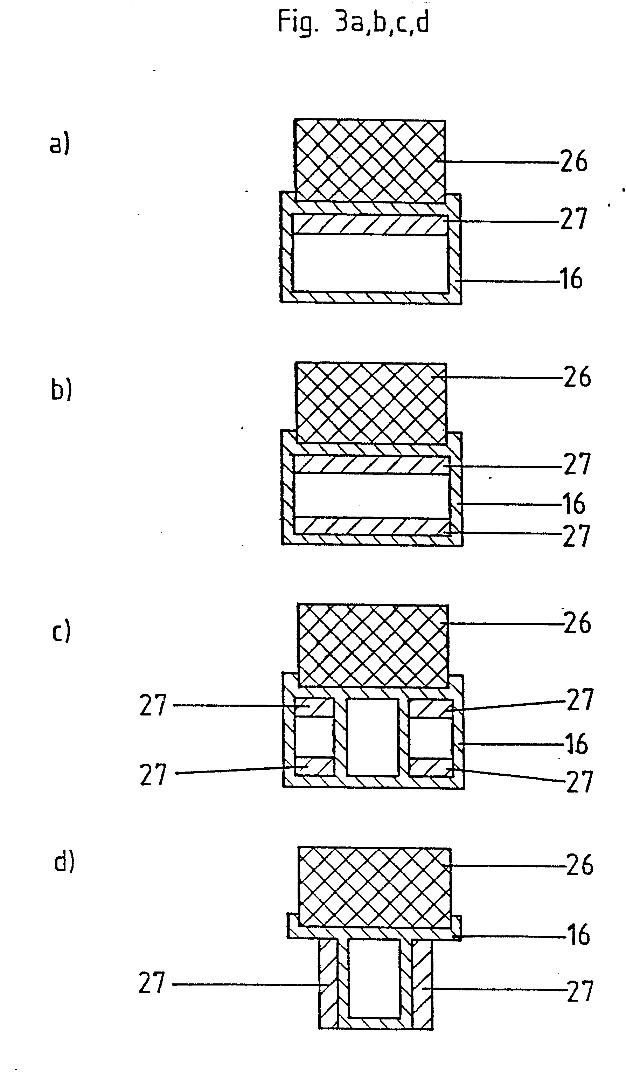

Die Figuren 3a, b, c, d zeigen einen metallischen Träger 16 (meist aus Stahl oder Aluminium) einer Schleifleiste 9 (Figuren 1a, 2a, b, c, d) im Querschnitt. Der Träger 16 weist verschiedene Profile auf, wobei im oberen fahrdrahtseitigen U-förmigen Profil ein auswechselbares Schleifstück aus gepreßter Hartkohle 26 als Kontaktwerkstoff, z.B. durch Kleben oder verlöteten Klemmen (nicht näher gezeigt) angeordnet ist.

Der untere Teil des U-Profils des Trägers 16 ist hohl und weist verschiedene, z.B. quadratische oder rechteckige Profilierungen auf, worin geeignete Profilstücke oder durchgehende Profilleisten, z.B. unidirektionale CFK-Profile 27 befestigt sind. Diese CFK-Profile können erforderlichenfalls seitlich des profilierten Trägers 16 angeordnet sein.

Die Befestigung der CFK-Profile kann an geeigneter Stelle in oder am Träger 16 unter Vorspannung des Trägers 16 durch Wärme oder Verformung, durch Kleben oder Nietung erfolgen.

In Figur 3a bis Figur 3d ist der Kontaktwerkstoff Hartkohle 26 im U-förmigen Profil des Trägers 16 angeordnet. Die CFK-Profile sind, wie Figuren 3b und 3c zeigen, im Inneren des Trägerprofils angeordnet, wobei Figur 3b und 3c eine Anordnung an der Ober- und Unterseite des Rechteckprofils zeigt und Figur 3d eine solche an den Profil-Außenseiten. In Figur 3c weist das Trägerprofil drei verschieden geformte Hohlprofile auf, wovon das mittlere rechteckig und die beiden
äußeren Profile quadratisch und mit den CFK-Profilen 27
ausgelegt sind.

Durch die Anordnung von Profilen (z.B. unidirektionale CFK-
Profile) mit sehr kleinem Wärmeausdehnungskoeffizienten wird
vermieden, daß es zum Reißen des zur Stromabnahme verwendeten
Kontaktmaterials, vorzugsweise der Hartkohle, kommt.

29.9.86
Kr/mr

DORNIER SYSTEM GMBH

7990 Friedrichshafen

Reg. S 521 EU

P a t e n t a n s p r ü c h e :

1. Stromabnehmervorrichtung für gleisgebundene Fahrzeuge,
bestehend aus einer Potentialtrennung zum Dach mittels
Isolatoren, einem Grundrahmen mit Hubantrieb und Stromführung, einer Unter- und Oberschere mit Steuerstange und
Verstrebungen, darauf aufbauend eine Wippe mit Auflaufhorn und mit darauf angeordneten zwei zueinander parallel
und quer zum Fahrdraht ausgerichteten, zu dessen beiden
Seiten abgestützten, als Verbundkonstruktion aus gepreßter Hartkohle und einem metallischen Träger bestehenden
Schleifleisten, d a d u r c h   g e k e n n z e i c h -
n e t,   daß die Isolatoren (22) innerhalb des Gestänges
der Unter- und Oberschere (2, 3) angeordnet sind und daß
die Steuerstange (14) starr ausgebildet und mit einem mit
der Wippe (7) starr verbundenen Anlenkhebel (13) und mit
der Unterschere (2) gelenkig verbunden ist.

/2

2. Stromabnehmervorrichtung nach Anspruch 1, dadurch gekennzeichnet, daß die Schleifleisten (9) auf Kugelgelenken (11) befestigt sind, die an senkrecht federnd geführten, mit der Wippe (7) verbundenen Trägern (12) angeordnet sind und daß zwischen den Schleifleisten (9) im Bereich der Kugelgelenke (11) je eine selbsteinstellende Momentenstütze (21) angeordnet ist.

3. Stromabnehmervorrichtung nach Anspruch 1, dadurch gekennzeichnet, daß die Schleifleisten (9) auf Gabelträgern (29) befestigt sind, die mittels in Fahrtrichtung ausgerichteten Bolzen (28) an senkrecht federnd geführten, mit der Wippe (7) verbundenen Trägern (12) kippbar angeordnet sind.

4. Stromabnehmervorrichtung nach Anspruch 1, dadurch gekennzeichnet, daß an jeder Schleifleiste (9) je ein Träger (12) an den Verbindungsstücken (19) kippbar gelagert ist.

5. Stromabnehmervorrichtung nach Anspruch 1, dadurch gekennzeichnet, daß die Enden (24) des Auflaufhornes (23) umklappbar oder schwenkbar sind.

6. Stromabnehmervorrichtung nach Anspruch 1, dadurch gekennzeichnet, daß im Träger (16) zusätzliche, aus Werkstoffen mit geringem oder negativen Wärmeausdehnungskoeffizienten bestehende Profile (27) angeordnet sind, die eine Längenänderung des Trägers (16) aufgrund von betriebsbedingter
Erwärmung verhindern oder so steuern, daß die auf den
Profilen (27) befestigte Hartkohle (26) auf Druck vorgespannt und dadurch ein Reißen verhindert wird.

7. Stromabnehmervorrichtung nach Anspruch 6, dadurch gekennzeichnet, daß die Profile (27) unidirektionale CFK-
Profile sind.

8. Stromabnehmervorrichtung nach den Ansprüchen 6 und 7, dadurch gekennzeichnet, daß die Profile (27) an verschiedenen Stellen des Trägers (16) angeordnet sind.

9. Stromabnehmervorrichtung nach den Ansprüchen 6 bis 8, dadurch gekennzeichnet, daß die Profile (27) im Träger (16)
als Ein- oder Mehrkammerprofile angeordnet sind.

10. Stromabnehmervorrichtung nach den Ansprüchen 6 bis 9, dadurch gekennzeichnet, daß die Profile (27) im Träger (16)
durch Kleben, Nieten oder Schrauben befestigt sind.

29.9.86
Kr/mr

022212

a)

b)

c)

Fig. 1a,b,c

Fig. 2 a,b

c)

d)

Fig. 2 c,d

Fig. 3a,b,c,d

a)

26
27
16

b)

26
27
16
27

c)

27
27
26
27
16
27

d)

26
16
27
27